# EUROPÄISCHE PATENTSCHRIFT

(11) **EP 3 477 189 B1**
(45) Veröffentlichungstag und Bekanntmachung des Hinweises auf die Patenterteilung: **27.09.2023**
(21) Anmeldenummer: 18202016.4
(22) Anmeldetag: 23.10.2018
(51) Int. Cl.: F21S 4/28, F21V 5/02, F21V 17/16, G02B 19/00, F21V 5/00, F21Y 115/10, F21V 5/04, G02B 3/08, F21V 7/00

(54) **LEUCHTMODUL**
LIGHTING MODULE
MODULE LUMINEUX

(30) Priorität: 27.10.2017 DE 102017125230
(43) Veröffentlichungstag der Anmeldung: 01.05.2019
(73) Patentinhaber: SITECO GmbH, 83301 Traunreut (DE)
(72) Erfinder: Lukanow, Stephan, 82166 Gräfelfing (DE)
(74) Vertreter: Schmidt, Steffen

(56) Entgegenhaltungen:
- WO-A1-2009/016586
- US-A1- 2009 128 921
- US-A1- 2015 192 257
- US-B1- 9 360 190

## Beschreibung

Die Erfindung betrifft ein Leuchtmodul. Das Dokument US 2015/192257 A1 offenbart eine Linse und ein Leuchtmodul.

Das Dokument WO 2009/016586 A1 offenbart einen TIR-Kollimator. Das Dokument US 9 360 190 B1 offenbart eine Linse. Das Dokument US 2009/128921 A1 offenbart einen TIR-Kollimator.

Eine zu lösende Aufgabe besteht darin, ein Leuchtmodul mit einer Linse anzugeben, die flach im Aufbau ist.

Die Erfindung ist durch das Leuchtmodul des Patentanspruchs 1 definiert. Vorteilhafte Ausgestaltungen und Weiterbildungen sind Gegenstand der abhängigen Patentansprüche.

Im Folgenden werden Teile der Beschreibung und Zeichnungen, die sich auf Ausführungsformen beziehen, die nicht von den Ansprüchen abgedeckt sind, nicht als Ausführungsformen der Erfindung präsentiert, sondern als Beispiele, die zum Verständnis der Erfindung nützlich sind.

Gemäß zumindest einer Ausführungsform umfasst die Linse eine Eintrittsfläche, über die im bestimmungsgemäßen Betrieb der Linse Licht in die Linse eintritt, und eine Austrittsfläche, über die im bestimmungsgemäßen Betrieb der Linse Licht aus der Linse ausgekoppelt wird. Die Eintrittsfläche ist der Austrittsfläche in einer ersten Richtung nachgeordnet. Die erste Richtung ist also eine Richtung weg von der Austrittsfläche und hin zur Eintrittsfläche.

Gemäß zumindest einer Ausführungsform umfasst die Linse eine sich in der ersten Richtung verjüngende Erhebung. Die Erhebung umfasst dabei eine lateral umlaufende Außenwand. Die Außenwand begrenzt die Erhebung in einer lateralen Richtung. Die erste Richtung ist also eine Richtung, entlang der sich die Erhebung verjüngt. Die laterale Richtung ist eine Richtung senkrecht zu der ersten Richtung. Die erste Richtung ist insbesondere eine Richtung parallel zu einer optischen Achse der Linse.

Gemäß zumindest einer Ausführungsform umfasst die Linse eine sich in der ersten Richtung verjüngende Erhebung. Die Erhebung umfasst dabei eine lateral umlaufende Außenwand. Die Außenwand begrenzt die Erhebung in einer lateralen Richtung. Die erste Richtung ist also eine Richtung, entlang der sich die Erhebung verjüngt. Die laterale Richtung ist eine Richtung senkrecht zu der ersten Richtung. Die erste Richtung ist insbesondere eine Richtung parallel zu einer optischen Achse der Linse.

Bei der Erhebung handelt es sich insbesondere um kuppelförmige oder domförmige Erhebungen. Die Erhebung kann im Wesentlichen die geometrische Form eines Kegelstumpfes oder eines Pyramidenstumpfes haben. Insbesondere hat die Außenwand der Erhebungen die geometrische Form einer Mantelfläche eines Kegelstumpfes oder eines Pyramidenstumpfes.

Bei der Linse im erfindungsgemäßen Leuchtmodul ist in dem der Austrittsfläche abgewandten Bereich der Erhebung eine erste Ausnehmung in der Erhebung ausgebildet. Im bestimmungsgemäßen Betrieb wird Licht im Bereich der ersten Ausnehmung in die Linse eingekoppelt.

Insbesondere ist die Ausnehmung also in dem Bereich der Spitze der Erhebung beziehungsweise in dem Bereich der Erhebung, an dem die laterale Ausdehnung der Erhebungen am geringsten ist, ausgebildet.

Bei der Linse im erfindungsgemäßen Leuchtmodul umgibt die Außenwand die erste Ausnehmung lateral vollständig. In Draufsicht auf die Spitze der Erhebung beziehungsweise in einer Blickrichtung entgegen der ersten Richtung ist die erste Ausnehmung der Erhebung lateral vollständig von einer zusammenhängenden Bahn der Außenwand umgeben. Jede entlang einer lateralen Richtung verlaufende Gerade, ausgehend von einem Punkt innerhalb der ersten Ausnehmung, kreuzt also die Außenwand der Erhebung.

Erfindungsgemäß beträgt im Leuchtmodul eine entlang der ersten Richtung gemessene Höhe der Außenwand überall rings um die Ausnehmung zumindest 50 % oder zumindest 60 % oder zumindest 70 % oder zumindest 75 % der Höhe der gesamten Linse. Die Höhe der Linse wird ebenfalls entlang der ersten Richtung gemessen. Die Höhe der Außenwand beziehungsweise der Linse ist also die Ausdehnung der Außenwand beziehungsweise der Linse entlang der ersten Richtung.

Erfindungsgemäß ist im Leuchtmodul eine Lichtquelle so bezüglich der Linse anordenbar, dass im Betrieb der Lichtquelle Licht aus der Lichtquelle im Bereich der ersten Ausnehmung in die Linse eingekoppelt wird, anschließend auf die Außenwand trifft und an der Außenwand größtenteils, zum Beispiel zu zumindest 50 % oder zu zumindest 75 % oder zu zumindest 90 %, in Richtung der Austrittsfläche totalreflektiert wird. Die Lichtquelle hat beispielsweise ein Lambert'sches Abstrahlprofil und emittiert dieses auf die Linse.

Ordnet man also eine Lichtquelle oberhalb der ersten Ausnehmung oder in der ersten Ausnehmung, zum Beispiel in einem Abstand einer Lichtaustrittsfläche der Lichtquelle zu der Linse von höchstens 10 cm oder höchstens 5 cm oder höchstens 1 cm, an und emittiert die Lichtquelle Licht in die Ausnehmung, so tritt Licht im Bereich der Ausnehmung in die Linse ein. Dieses Licht kann dann unmittelbar auf die Austrittsfläche treffen und ausgekoppelt werden. Ein Teil des im Bereich der Ausnehmung eingekoppelten Lichts kann aber zunächst auf die die Ausnehmung lateral umgebende Außenwand der Erhebung treffen. Die Außenwand ist so ausgebildet, dass das im Bereich der Ausnehmung in die Linse eintretende Licht an der Außenwand total reflektiert und dann in Richtung der Unterseite gelenkt wird. Die totalreflektierende Eigenschaft der Außenwand resultiert insbesondere aus der sich verjüngenden Geometrie der Erhebung.

Die Austrittsfläche einer Linse ist hier insbesondere durch den Bereich einer Linse definiert, über den im Betrieb das Licht ausgekoppelt wird.

Erfindungsgemäß umfasst im Leuchtmodul jede der Linsen eine Eintrittsfläche, über die im bestimmungsgemäßen Betrieb der Linse Licht in die Linse eintritt, und eine Austrittsfläche, über die im bestimmungsgemäßen Betrieb der Linse Licht aus der Linse ausgekoppelt wird. Die Eintrittsfläche ist der Austrittsfläche in einer ersten Richtung nachgeordnet. Ferner umfasst die Linse eine sich in der ersten Richtung verjüngende Erhebung mit einer lateral umlaufenden Außenwand. In dem der Austrittsfläche abgewandten Bereich der Erhebung ist eine erste Ausnehmung in der Erhebung ausgebildet. Die Außenwand umgibt die Ausnehmung lateral vollständig. Eine entlang der ersten Richtung gemessene Höhe der Außenwand beträgt überall rings um die Ausnehmung zumindest 50 % der Höhe der gesamten Linse. Eine Lichtquelle ist so bezüglich der Linse anordenbar, dass im Betrieb der Lichtquelle Licht aus der Lichtquelle im Bereich der ersten Ausnehmung in die Linse eingekoppelt wird, anschließend auf die Außenwand trifft und an der Außenwand größtenteils in Richtung der Austrittsfläche totalreflektiert wird.

Der vorliegenden Erfindung liegt insbesondere die Erkenntnis zu Grunde, dass eine wie hier beschriebene Linse besonders kompakt im Aufbau ist. Insbesondere die Kombination einer Ausnehmung, über die Licht in die Linse eintreten kann, mit der sich verjüngenden Form der Linse sorgt dafür, dass über die Ausnehmungen in die Linsen eintretendes Licht an der großflächigen Außenwand totalreflektiert wird und somit die Linsen besonders effizient Licht bündelt.

Gemäß zumindest einer Ausführungsform erstreckt sich die erste Ausnehmung ausgehend von einer ersten Öffnung in der Linse bis zu einer ersten Bodenfläche. Die erste Öffnung ist im oberen Bereich der Erhebung ausgebildet. Die erste Bodenfläche ist bezüglich der Öffnung in Richtung hin zur Austrittsfläche verschoben.

Ein Abstand zwischen der ersten Öffnung und der ersten Bodenfläche beziehungsweise die Tiefe der ersten Ausnehmung gemessen entgegen der ersten Richtung beträgt beispielsweise zumindest 1 mm oder zumindest 2 mm oder zumindest 3 mm. Alternativ oder zusätzlich ist der Abstand beziehungsweise die Tiefe höchstens 5 mm oder höchstens 4 mm. Zum Beispiel beträgt die Tiefe der ersten Ausnehmung zumindest 10 % oder zumindest 20 % der Höhe der Linse. Alternativ oder zusätzlich beträgt die Tiefe der ersten Ausnehmung höchstens 50 % oder höchstens 40 % der Höhe der Linse.

Die erste Bodenfläche hat beispielsweise eine mittlere laterale Ausdehnung, gemessen senkrecht zur ersten Richtung, von zumindest 2 mm oder zumindest 3 mm. Alternativ oder zusätzlich ist die mittlere laterale Ausdehnung höchstens 5 mm oder höchstens 4 mm. Beispielsweise beträgt die mittlere laterale Ausdehnung der ersten Bodenfläche zumindest 30 % oder zumindest 40 % der maximalen lateralen Ausdehnung der Erhebung. Alternativ oder zusätzlich beträgt die mittlere laterale Ausdehnung der ersten Bodenfläche höchstens 60 % oder höchstens 50 % der maximalen lateralen Ausdehnung der Erhebung.

Gemäß zumindest einer Ausführungsform ist die erste Ausnehmung in lateraler Richtung von einer ersten Innenwand der Linse begrenzt. Die erste Innenwand umgibt die erste Ausnehmung in lateraler Richtung bevorzugt vollständig. In Draufsicht auf die Spitze der Erhebung und/oder in Blickrichtung entgegen der ersten Richtung ist die Ausnehmung also von einer zusammenhängenden Bahn der Innenwand vollständig umgeben. Die erste Außenwand umgibt wiederum die erste Innenwand in lateraler Richtung vollständig.

Die Außenwand und die erste Innenwand schneiden sich bevorzugt entlang einer Kante. Diese Kante bildet beispielsweise die Kontur der ersten Öffnung. Die erste Bodenfläche und die Innenwand schneiden sich bevorzugt ebenfalls entlang einer Kontur, die die Bodenfläche lateral begrenzt und vollständig umgibt.

Gemäß zumindest einer Ausführungsform umfasst die Eintrittsfläche der Linse die erste Bodenfläche und die erste Innenwand. Im bestimmungsgemäßen Betrieb tritt zum Beispiel Licht über die erste Bodenfläche und die erste Innenwand in die Linse ein.

Die Außenwand, die erste Bodenfläche und die erste Innenwand bilden insbesondere Außenflächen der Linse. Insbesondere grenzen diese Flächen an ein gasförmiges Medium, wie Luft.

Gemäß zumindest einer Ausführungsform überlappt die Außenwand in eine Richtung entgegen der ersten Richtung mit der ersten Öffnung, der ersten Innenwand und der ersten Bodenfläche und überragt die erste Bodenfläche. Anders ausgedrückt erstreckt sich die Außenwand weiter in Richtung der Austrittsfläche als die erste Innenwand. In einer Seitenansicht, mit Blick entlang einer lateralen Richtung, überdeckt die Außenwand die erste Innenwand und die erste Bodenfläche bevorzugt vollständig. "Entgegen einer Richtung" bedeutet hier und im Folgenden antiparallel zu der Richtung. "Entlang einer Richtung" bedeutet parallel zu der Richtung.

Die erste Bodenfläche ist zum Beispiel im Rahmen der Herstellungstoleranz flach ausgebildet. Besonders bevorzugt erstreckt sich die erste Bodenfläche im Wesentlichen senkrecht zur ersten Richtung. Die erste Bodenfläche kann mit einer parallel zur ersten Richtung verlaufenden Achse aber auch einen Winkel von beispielsweise höchstens 80° einschließen.

Die Außenwand und/oder die erste Bodenfläche und/oder die erste Innenwand können glatt sein. "Glatt" bedeutet, dass eine Fläche frei von Vorsprüngen oder Gräben ist, deren Ausdehnung in der Größenordnung der Ausdehnung der Fläche liegt. Beispielsweise ist eine glatte Fläche frei von Vorsprüngen oder Gräben, deren Höhen oder Tiefen oder Breiten mehr als 1/20 oder mehr als 1/10 der Ausdehnung der Fläche betragen.

Die Außenwand und/oder die erste Bodenfläche und/oder die erste Innenwand können poliert sein. Unter polierten Flächen werden insbesondere solche Flächen mit einer Rauheit von höchstens 0,5 µm oder höchstens 0,3 µm oder höchstens 0,2 µm oder höchstens 0,1 µm verstanden. Bevorzugt sind auch die ersten Eintrittsflächen polierte Außenflächen der Linse.

Unter einer Aufrauhung werden Strukturen auf einer Oberfläche verstanden, durch die die Oberfläche ein Profil oder eine Rauheit bekommt. Die Rauheit ist dabei ein Maß für die durch die Strukturen erzeugte Variation der Oberflächenhöhe der entsprechenden Oberfläche. Zur Aufrauhung werden zum Beispiel nur Strukturen gezählt, die eine kleine Variation in der Oberflächenhöhe erzeugen. Eine "kleine Variation" ist zum Beispiel eine Variation, die im Vergleich zur Ausdehnung der Oberfläche klein, beispielsweise höchstens 1/10 oder höchstens 1/20 oder höchstens 1/100 so groß wie die Ausdehnung der Oberfläche, ist. Dadurch lässt sich die Rauheit einer Oberfläche, die oft unbeabsichtigt und schwer kontrollierbar ist, von beabsichtigt eingebrachten Strukturen unterscheiden.

Die Rauheit kann dabei die mittlere Rauheit sein. Das heißt die Rauheit gibt den mittleren Abstand eines Messpunktes auf der Oberfläche zu einer Mitteloberfläche an. Die Mitteloberfläche schneidet innerhalb eines Messbereichs das wirkliche Profil der Oberfläche so, dass die Summe der gemessenen Profilabweichungen, bezogen auf die Mitteloberfläche, minimal wird. Alternativ kann die Rauheit aber auch die quadratische Rauheit, also die mittlere quadratische Profilabweichung von der Mitteloberfläche, oder die maximale Rauheit, also die maximal gemessene Profilabweichung von der Mitteloberfläche, sein.

Die erste Bodenfläche kann alternativ auch Streustrukturen und/oder Mikrolinsen aufweisen. Die Mikrolinsen sind zum Beispiel Kugelkappen. Diese weisen zum Beispiel eine Scheitelhöhe oder Dicke zwischen einschließlich 0,2 mm bis 0,5 mm auf.

Gemäß zumindest einer Ausführungsform nimmt eine laterale Ausdehnung der ersten Ausnehmung von der ersten Öffnung in Richtung der ersten Bodenfläche ab. In Draufsicht auf die Spitze der Erhebung und/oder in Blickrichtung entgegen der ersten Richtung überdeckt die erste Öffnung die erste Bodenfläche zum Beispiel vollständig. Zum Beispiel ist die laterale Ausdehnung der ersten Öffnung um zumindest 20 % oder zumindest 40 % oder zumindest 50 % größer als die laterale Ausdehnung der ersten Bodenfläche. Alternativ oder zusätzlich ist die laterale Ausdehnung der ersten Öffnung höchstens 60 % oder höchstens 50 % größer als die laterale Ausdehnung der ersten Bodenfläche. Die Innenwand der ersten Ausnehmung schließt mit einer Achse entlang der ersten Richtung einen Winkel von beispielsweise zumindest 10° ein.

Durch die sich verjüngende Form der ersten Ausnehmung wird insbesondere erreicht, dass Licht, welches über die erste Innenwand der ersten Ausnehmung in die Linse eintritt, hin zur Außenwand gelenkt und von dort totalreflektiert wird.

Die Linse umfasst zum Beispiel Glas oder Kunststoff oder besteht aus Glas oder Kunststoff. Der Kunststoff kann PMMA sein.

Gemäß zumindest einer Ausführungsform ist die Außenwand der Linse konvex gekrümmt. Bevorzugt ist die Außenwand der Linse über ihre gesamte Fläche konvex gekrümmt. Durch die konvexe Krümmung kann die Wahrscheinlichkeit für Totalreflexion weiter erhöht werden.

Gemäß zumindest einer Ausführungsform ist die Außenwand der Linse rotationssymmetrisch bezüglich einer durch die erste Ausnehmung verlaufenden Achse. Bei der Achse handelt es sich zum Beispiel um eine optische Achse der Linse. Die Achse verläuft bevorzugt parallel zur ersten Richtung. Zum Beispiel weist die Außenwand der ersten Ausnehmung dann im Wesentlichen die Form der Mantelfläche eines Zylinderstumpfes auf.

Gemäß zumindest einer Ausführungsform weist die Außenwand der Linse eine n-zählige Drehsymmetrie bei der Drehung um eine durch die erste Ausnehmung verlaufende Achse auf. Die Achse kann eine optische Achse der Linse sein. Die Achse verläuft bevorzugt parallel zur ersten Richtung. n ist dabei eine ganze Zahl größer gleich 2. Zum Beispiel hat die Außenwand eine 4-zählige oder 6-zählige oder 8-zählige Drehsymmetrie. Bei einem Schnitt senkrecht zur ersten Richtung durch die Außenwand hat die Schnittlinie zwischen der Außenwand und der Schnittebene beispielsweise die Form eines Quadrats oder eines regelmäßigen Sechsecks oder eines regelmäßigen Achtecks, wobei die Ecken jeweils abgerundet sein können.

Gemäß zumindest einer Ausführungsform ist die Austrittsfläche der Linse im Rahmen der Herstellungstoleranz flach. Bevorzugt ist die Austrittsfläche dann auch glatt.

Laut Anspruch 1 umfasst im Leuchtmodul jede der Linsen in der Linsenanordnung im Bereich der Austrittsfläche eine zweite Ausnehmung, die sich ausgehend von einer zweiten Öffnung in die Linse hinein bis zu einer zweiten Bodenfläche erstreckt. Die zweite Bodenfläche ist gegenüber der zweiten Öffnung also in Richtung der ersten Ausnehmung verschoben.

Ein Abstand zwischen der zweiten Öffnung und der zweiten Bodenfläche beziehungsweise die Tiefe der zweiten Ausnehmung, gemessen entlang der ersten Richtung, beträgt beispielsweise zumindest 1 mm oder zumindest 2 mm oder zumindest 3 mm. Alternativ oder zusätzlich ist der Abstand beziehungsweise die Tiefe höchstens 5 mm oder höchstens 4 mm. Zum Beispiel beträgt die Tiefe der zweiten Ausnehmung zumindest 10 % oder zumindest 20 % oder zumindest 50 % der Höhe der Linse. Alternativ oder zusätzlich beträgt die Tiefe der zweiten Ausnehmung höchstens 60 % oder höchstens 55 % der Höhe der Linse.

Die zweite Bodenfläche hat beispielsweise eine mittlere laterale Ausdehnung von zumindest 2 mm oder zumindest 3 mm. Alternativ oder zusätzlich ist die mittlere laterale Ausdehnung höchstens 5 mm oder höchstens 4 mm. Beispielsweise beträgt die mittlere laterale Ausdehnung der zweiten Bodenfläche zumindest 30 % oder zumindest 40 % der maximalen lateralen Ausdehnung beziehungsweise der Basisbreite der Erhebung. Alternativ oder zusätzlich beträgt die mittlere laterale Ausdehnung der zweiten Bodenfläche höchstens 60 % oder höchstens 50 % der maximalen lateralen Ausdehnung der Erhebung.

Laut Anspruch 1 ist im Leuchtmodul die zweite Ausnehmung in lateraler Richtung von einer zweiten Innenwand der Linse begrenzt. In Draufsicht auf die Austrittsfläche und/oder in Blickrichtung parallel zur ersten Richtung ist die zweite Ausnehmung also von einer zusammenhängenden Bahn aus der zweiten Innenwand vollständig umgeben.

Laut Anspruch 1 umfasst im Leuchtmodul die Austrittsfläche der Linse die zweite Bodenfläche und die zweite Innenwand. Insbesondere wird also Licht, das über die erste Ausnehmung in die Linse eingekoppelt wird, sowohl über die zweite Bodenfläche als auch über die zweite Innenwand wieder aus der Linse ausgekoppelt.

Laut Anspruch 1 nimmt im Leuchtmodul die laterale Ausdehnung der zweiten Ausnehmung von der zweiten Öffnung in Richtung der zweiten Bodenfläche ab. Die zweite Innenwand der zweiten Ausnehmung kann beispielsweise wiederum die Form der Mantelfläche eines Kegelstumpfes oder Zylinderstumpfes haben.

Die zweite Bodenfläche und die zweite Innenwand bilden bevorzugt wiederum Außenflächen der Linse. Insbesondere grenzen diese Flächen also an ein gasförmiges Medium, wie Luft.

Laut Anspruch 1 ist in der Linse des Leuchtmoduls die zweite Bodenfläche eine konvex gekrümmte Fläche. Bevorzugt ist die zweite Bodenfläche über ihre gesamte Fläche konvex gekrümmt.

Durch die zweite Ausnehmung, insbesondere die konvex gekrümmte Bodenfläche in der zweiten Ausnehmung, kann das über die Austrittsfläche aus der Linse austretende Licht nochmals gebündelt werden, so dass von der Linse ein besonders schmaler Lichtstrahl emittiert wird.

Gemäß zumindest einer Ausführungsform ist die zweite Öffnung der zweiten Ausnehmung größer als die erste Öffnung der ersten Ausnehmung. In Draufsicht auf die Austrittsfläche und/oder in einer Blickrichtung entlang der ersten Richtung betrachtet, überdeckt die zweite Öffnung die erste Öffnung beispielsweise vollständig.

Ebenso kann die zweite Bodenfläche der zweiten Ausnehmung größer als die erste Bodenfläche der ersten Ausnehmung sein. Beispielsweise überdeckt dann in Draufsicht auf die Austrittsfläche und/oder in einer Blickrichtung entlang der ersten Richtung betrachtet die zweite Bodenfläche die erste Bodenfläche vollständig.

Gemäß zumindest einer Ausführungsform sind die zweite Innenwand und/oder die zweite Bodenfläche rotationssymmetrisch bezüglich einer durch die zweite Ausnehmung verlaufenden Achse gestaltet. Die Achse ist zum Beispiel eine optische Achse der Linse. Insbesondere verläuft die Achse parallel zur ersten Richtung. In diesem Fall hat die zweite Innenwand zum Beispiel die Form der Mantelfläche eines Kegelstumpfes.

Gemäß zumindest einer Ausführungsform ist die zweite Bodenfläche in Draufsicht auf die zweite Bodenfläche betrachtet halbkreisförmig oder kreissegmentförmig gestaltet. Das heißt, beim Blick in die zweite Ausnehmung hinein, insbesondere bei einem Blick entlang der ersten Richtung, hat die zweite Bodenfläche die Form eines Halbkreises oder eines Kreissegments. Dabei kann die zweite Bodenfläche konvex gekrümmt sein. In Draufsicht auf die zweite Bodenfläche betrachtet überdeckt die halbkreisförmige oder kreissegmentförmige zweite Bodenfläche die erste Bodenfläche bevorzugt nur teilweise. Beispielsweise überdeckt die zweite Bodenfläche in etwa die Hälfte der ersten Bodenfläche, beispielsweise zwischen einschließlich 40 % und 60 % der ersten Bodenfläche. Durch eine solche halbkreisförmige oder kreissegmentförmige zweite Bodenfläche, die die erste Bodenfläche nur teilweise überdeckt, kann die Linse zu einer asymmetrischen Lichtverteilung führen.

Ein Kreissegment ist ein Teil eines Kreises und umfasst einen Teil der Außenkontur dieses Kreises. Die Fläche eines Kreissegments ist kleiner als die Fläche des Kreises, zum Beispiel höchstens 80 %.

Gemäß zumindest einer Ausführungsform ist die Austrittsfläche der Linse mit linear verlaufenden Strukturen versehen. Insbesondere weist die Austrittsfläche der Linse dann keine Drehsymmetrie und keine Rotationssymmetrie auf. Eine solche Austrittsfläche führt insbesondere zu einer anderen Lichtstärke-Verteilung in einer CO-Ebene als in einer C90-Ebene. Bei den linear verlaufenden Strukturen handelt es sich beispielsweise um im Wesentlichen parallel verlaufende Rillen in der Unterseite im Bereich der Austrittsfläche.

Eine der linearen Strukturen kann eine mittlere Einkerbung in der Austrittfläche der Linse sein. Die mittlere Einkerbung kann im Wesentlichen V-förmig sein. Die mittlere Einkerbung verläuft bevorzugt unterhalb der ersten Öffnung. Das heißt, bei einer Blickrichtung entlang der ersten Richtung überdeckt die mittlere Einkerbung die erste Öffnung zumindest teilweise. Die mittlere Einkerbung kann bezüglich der C90-Ebene spiegelsymmetrisch ausgebildet sein.

Die mittlere Einkerbung umfasst zum Beispiel zwei linear verlaufende Kerbflächen, die in der ersten Richtung aufeinander zulaufen und sich entlang einer linear verlaufenden Kerbkante schneiden. Die Kerbflächen der Einkerbung begrenzen die Einkerbung und bilden Teile der Austrittsfläche. Die Kerbkante verläuft bevorzugt in der C90-Ebene.

Die Winkel zwischen den beiden Kerbflächen an der Kerbkante beträgt beispielsweise zwischen einschließlich 100° und 115°. Die Tiefe der mittleren Einkerbung, gemessen entlang der ersten Richtung, beträgt beispielsweise zwischen 5 % und 20 % der Höhe der Linse. Die Tiefe beträgt zum Beispiel zwischen einschließlich 1 mm und 1,5 mm.

Die mittlere Einkerbung ist bevorzugt so eingerichtet, dass Licht, das über die Ausnehmung in die Linse eintritt und auf die Kerbflächen der mittleren Einkerbung trifft, größtenteils totalreflektiert wird. Die mittlere Einkerbung dient insbesondere dazu, eine Lichtstärkeverteilung zu erzeugen, die in der CO-Ebene betrachtet zwei Maxima beidseitig der 0°-Emissionsachse hat und auf der 0°-Emissionsachse ein Minimum aufweist. Die Maxima liegen beispielsweise zwischen einschließlich 25° und 35° gemessen bezüglich der 0°-Emissionsachse.

Beidseitig der mittleren Einkerbung können linear verlaufende Rillen in der Austrittsfläche angeordnet sein. Die Rillen bewirken durch Brechung und/oder Reflexion eine weitere Umverteilung des Lichts. Die Rillen sind beispielsweise zwischen einschließlich 3 mm und 5 mm von der C90-Eben oder von der Kerbkante entfernt angeordnet. Die Tiefe der Rillen beträgt beispielsweise zwischen einschließlich 1/20 und 1/5 der Tiefe der mittleren Einkerbung. Zum Beispiel sind die Rillen zwischen einschließlich 0,05 mm und 0,15 mm tief.

Außerhalb der mittleren Einkerbung und den Rillen kann die Austrittsfläche zum Beispiel im Rahmen der Herstellungstoleranz flach sein und/oder entlang einer Ebene senkrecht zur ersten Richtung verlaufen.

Gemäß zumindest einer Ausführungsform ist die Austrittsfläche der Linse mit Mikrolinsen versehen.

Die Linsenanordnung umfasst mehrere wie oben beschriebene Linsen. Alle im Zusammenhang mit den Linsen offenbarten Merkmale sind daher auch für die Linsenanordnung offenbart.

Erfindungsgemäß umfasst die Linsenanordnung mehrere lateral nebeneinander angeordnete Linsen, insbesondere Linsen gemäß einer oder mehreren der zuvor beschriebenen Ausführungsformen. Die Linsenanordnung kann aus der Mehrzahl der Linsen bestehen. "Lateral nebeneinander" bedeutet dabei, dass die Linsen nebeneinander entlang einer lateralen Richtung angeordnet sind. Die Linsen können beispielsweise in einer Reihe oder in mehreren zueinander parallelen Reihen angeordnet sein. Insbesondere können die Linsen matrixartig angeordnet sein, zum Beispiel in einem quadratischen, rechteckigen oder hexagonalen MatrixMuster. Die Linsen können aber auch kreisförmig angeordnet sein.

Der Abstand von einer Linse zu der nächsten Linse beträgt beispielsweise jeweils zumindest 5 mm oder zumindest 8 mm oder zumindest 9,5 mm. Alternativ oder zusätzlich beträgt der Abstand zwischen einer Linse zu der nächsten Linse beispielsweise jeweils höchstens 20 mm oder höchstens 15 mm oder höchstens 10 mm. Der Abstand zwischen zwei Linsen wird dabei bevorzugt zwischen Zentren oder Mittelpunkten, insbesondere zwischen optischen Achsen der Linsen, gemessen.

Gemäß zumindest einer Ausführungsform sind die Austrittsflächen der Linsen durch eine zusammenhängende Unterseite der Linsenanordnung gebildet. Das heißt, Licht, welches über eine Austrittsfläche aus der Linse ausgekoppelt wird, wird gleichzeitig aus der Linsenanordnung ausgekoppelt. Gemäß zumindest einer Ausführungsform ist die Linsenanordnung einstückig beziehungsweise einteilig ausgebildet. Das heißt, alle Bereiche der Linsenanordnung, insbesondere alle Linsen, sind integral miteinander ausgebildet und enthalten das gleiche Material oder bestehen aus dem gleichen Material. Die Linsenanordnung ist beispielsweise aus einem Guss. Das Innere der Linsenanordnung ist im Rahmen der Herstellungstoleranz also bevorzugt frei von Grenzflächen, an denen Licht gebrochen werden kann.

Beispielsweise ist die gesamte Unterseite der Linsenanordnung im Rahmen der Herstellungstoleranz flach und/oder glatt.

Gemäß zumindest einer Ausführungsform sind mehrere Linsen entlang einer Linie oder entlang einer Geraden angeordnet. Die Linsenanordnung umfasst zum Beispiel genau eine Reihe hintereinander angeordneter Linsen oder genau zwei Reihen hintereinander angeordneter Linsen. In jeder Reihe sind die Linsen bevorzugt entlang einer Linie oder Geraden hintereinander angeordnet. Zum Beispiel sind in einer Reihe mindestens drei oder mindestens vier oder mindestens fünf Linsen hintereinander angeordnet.

Gemäß zumindest einer Ausführungsform erstrecken sich die linearen Strukturen über die entlang der Linie angeordneten Linsen, sodass die geometrische Form der Unterseite der Linsenanordnung entlang der Linie im Rahmen der Herstellungstoleranz nicht variiert. Anders ausgedrückt hat in einer Querschnittsansicht betrachtet, bei einem Schnitt senkrecht zu der Linie, die Unterseite eine bestimmte Form oder Struktur. Verschiebt man die Schnittebene entlang der Linie hinweg über eine Mehrzahl von Linsen, so bleibt die Form der Unterseite im Wesentlichen gleich.

Gemäß zumindest einer Ausführungsform umfasst die Linsenanordnung einen die Linsenanordnung lateral begrenzenden Randbereich. Der Randbereich ist zusammenhängend und umgibt alle Linsen lateral. Anders ausgedrückt ist der Randbereich ein Rahmen, der in lateraler Richtung, also parallel zur Haupterstreckungsebene, alle Linsen umgibt und einschließt.

Gemäß zumindest einer Ausführungsform ist der Randbereich dünner als die Linsen ausgebildet. Das heißt, die Höhe oder Dicke der Linsenanordnung im Randbereich ist geringer als die Höhe der Linse. Zum Beispiel beträgt die Höhe oder Dicke der Linse im Randbereich höchstens 30 % oder höchstens 20 % der Höhen der Linsen.

Gemäß zumindest einer Ausführungsform ist der Randbereich dazu eingerichtet, das in den Randbereich eintretende Licht durch Brechung und/oder Totalreflexion zu lenken.

Darüber hinaus wird ein Leuchtmodul angegeben. Das Leuchtmodul umfasst insbesondere eine wie oben beschriebene Linsenanordnung. Alle im Zusammenhang mit der Linsenanordnung offenbarten Merkmale sind daher auch für das Leuchtmodul offenbart und umgekehrt.

Ein Leuchtmodul kann auch als Leuchte bezeichnet werden.

Gemäß zumindest einer Ausführungsform umfasst das Leuchtmodul eine Linsenanordnung gemäß einem der oben beschriebenen Ausführungsformen.

Gemäß zumindest einer Ausführungsform umfasst das Leuchtmodul mehrere lateral nebeneinander angeordnete Lichtquellen. Die Lichtquellen emittieren im Betrieb Licht in Richtung der Linsenanordnung. Die Lichtquellen umfassen bevorzugt jeweils eine oder mehrere Leuchtdioden (kurz: LEDs). Die Lichtquellen sind zum Beispiel Punktlichtquellen. Das heißt, die Lichtstärke-Verteilungskurve einer Lichtquelle in der CO-Ebene und in der C90-Ebene betrachtet sind im Wesentlichen gleich.

Die Lichtquellen sind also entlang der Haupterstreckungsebene der Linsenanordnung nebeneinander angeordnet. Die Lichtquellen können dabei linear, in einer Reihe, in mehreren Reihen oder matrixartig oder hexagonal oder kreisförmig angeordnet sein. Insbesondere entspricht die Anordnung der Lichtquellen der Anordnung der Linsen.

Erfindungsgemäß ist jeder Lichtquelle genau eine Linse nachgeordnet. In einer Blickrichtung entgegen der ersten Richtung überdeckt jede Lichtquelle beispielsweise genau eine Linse teilweise oder vollständig. Andersherum überdeckt bei einem Blick entlang der ersten Richtung jede Linse genau eine Lichtquelle teilweise oder vollständig. Insbesondere ist also jeder Lichtquelle eine Linse eineindeutig zugeordnet.

Erfindungsgemäß erstreckt sich die Erhebung jeder Linse in Richtung der Lichtquelle, so dass die ersten Ausnehmungen jeweils den Lichtquellen zugewandt sind.

Erfindungsgemäß ist das Leuchtmodul so eingerichtet, dass das aus einer Lichtquelle austretende Licht im Bereich der ersten Ausnehmung in die nachgeordnete Linse eintritt, der davon auf die Außenwand der Linse treffende Anteil des Lichts größtenteils, das heißt zu zumindest 50 % oder zu zumindest 75 % oder zu zumindest 90 %, totalreflektiert wird und das Licht über die Austrittsfläche ausgekoppelt wird.

Beispielsweise sind die ersten Öffnungen der ersten Ausnehmungen größer als die Lichtquellen ausgebildet. In einer Blickrichtung entlang der ersten Richtung überdeckt beispielsweise die erste Öffnung der Linse die zugeordnete Lichtquelle vollständig.

Beispielsweise sind die Lichtquellen innerhalb der Ausnehmungen angeordnet. Die Lichtquellen sind dann zum Beispiel lateral vollständig von den Außenwänden der Linsen umgeben und überdecken die Lichtquellen bei einer Blickrichtung entlang einer lateralen Richtung.

Gemäß zumindest einer Ausführungsform sind die Linsen so bezüglich der Lichtquellen angeordnet, dass zumindest 90 % oder zumindest 95 % oder zumindest 99 % des von einer Lichtquelle emittierten Lichts in die erste Ausnehmung der zugeordneten Linse emittiert wird. Im Bereich der ersten Ausnehmungen kann dann das Licht über die erste Innenwand und die erste Bodenfläche in die Linse eintreten.

Laut Anspruch 1 umfasst das Leuchtmodul eine lichtdurchlässige Abdeckplatte, die beabstandet zu den Linsen angeordnet ist. In Draufsicht auf die Abdeckplatte und/oder bei einer Blickrichtung entlang der ersten Richtung der Linsenanordnung überdeckt die Abdeckplatte bevorzugt die gesamte Linsenanordnung und/oder alle Lichtquellen.

Die Abdeckplatte kann transparent oder transluzent für das Licht der Lichtquellen sein. Insbesondere ist die Abdeckplatte einstückig ausgebildet. Die Abdeckung kann Glas oder Kunststoff umfassen oder aus Glas oder Kunststoff bestehen.

Erfindungsgemäß trifft im bestimmungsgemäßen Betrieb das über die Austrittsflächen ausgekoppelte Licht auf die Abdeckplatte. Das Licht kann dann durch die Abdeckplatte hindurch aus dem Leuchtmodul gelangen.

Die Abdeckplatte schützt insbesondere die Linsenanordnung und die Lichtquellen vor äußeren Einflüssen, wie dem Eindringen von Schmutz. Andererseits kann die Abdeckung den Benutzer vor einer Berührung stromführender Bereiche des Leuchtmoduls schützen. Gemäß zumindest einer Ausführungsform ist die Abdeckplatte zur Umverteilung der aus den Linsen austretenden Lichtverteilung eingerichtet. Das heißt, die Abdeckplatte ist zur weiteren Strahlformung eingerichtet. Die Abdeckplatte kann beispielsweise eine umlenkende und/oder bündelnde und/oder reflektierende Wirkung für das aus den Linsen kommende Licht haben.

Laut Anspruch 1 ist die Abdeckplatte in einem Mittelbereich strukturiert. Der Mittelbereich überdeckt in Draufsicht auf die Abdeckplatte und/oder in einer Blickrichtung entlang der ersten Richtung die Lichtquellen, insbesondere alle Lichtquellen. Die Strukturierung des Mittelbereichs dient dazu, eine weitere Bündelung des von der Linse ausgestrahlten Lichts zu erreichen. Insbesondere ist die Strukturierung auf einer den Lichtquellen zugewandten Eintrittsseite der Abdeckung ausgebildet.

Die Strukturen im Mittelbereich erstrecken sich bevorzugt entlang von Reihen aus den Linsen oder den Lichtquellen. Die Strukturen verlaufen bevorzugt im Wesentlichen linear und/oder parallel zueinander. In einer Querschnittsansicht, senkrecht zum linearen Verlauf der Strukturen betrachtet, sind die Strukturen dreiecksförmig, trapezförmig und/oder haben die Form einer Wölbung in Richtung auf die Lichtquellen zu.

Die Strukturen im Mittelbereich können sich aber auch senkrecht zu den Reihen aus Linsen oder Lichtquellen erstrecken. In diesem Fall dienen die Strukturen der Verbesserung des Erscheinungsbildes unter flachem Betrachtungswinkel.

Gemäß zumindest einer Ausführungsform umfasst die Abdeckplatte in einem Randbereich Strukturen zur Umlenkung des in den Randbereich der Abdeckplatte gelenkten Lichts, insbesondere zur Umlenkung in Richtung des Mittelbereichs. In Draufsicht auf die Abdeckplatte und/oder bei einer Blickrichtung entlang der ersten Richtung überdeckt der Randbereich die Lichtquellen und/oder Linsen nicht.

Die Strukturen im Randbereich sind insbesondere auf der den Lichtquellen zugewandten Eintrittsseite der Abdeckung ausgebildet. Die Strukturen sind insbesondere dazu ausgebildet, das auftreffende Licht durch Brechung und/oder Totalreflexion umzulenken.

Die Strukturen im Randbereich erstrecken sich bevorzugt entlang von Reihen aus den Linsen oder den Lichtquellen. Die Strukturen verlaufen bevorzugt im Wesentlichen linear und/oder parallel zueinander. In einer Querschnittsansicht, senkrecht zum linearen Verlauf der Strukturen betrachtet, sind die Strukturen dreiecksförmig, trapezförmig und/oder haben die Form einer Wölbung in Richtung auf die Lichtquellen zu.

Beispielsweise beträgt eine projizierte Breite des Randbereichs höchstens 30 % einer Breite des Mittelbereichs.

Die Strukturen des Randbereichs umfassen zum Beispiel Zacken und/oder Rillen im Material der Abdeckung, die sich stellenweise in Richtung des Mittelbereichs erstrecken.

Gemäß zumindest einer Ausführungsform ist eine den Lichtquellen abgewandte Seite der Abdeckung im Rahmen der Herstellungstoleranz glatt.

Gemäß zumindest einer Ausführungsform umfasst die Abdeckplatte ein lichtstreuendes Material oder ist aus einem lichtstreuenden Material gebildet. Beispielsweise umfasst oder besteht die Abdeckplatte aus einem Matrixmaterial mit darin eingebrachten lichtstreuenden Partikeln.

Nachfolgend werden eine hier beschriebene Linse, eine hier beschriebene Linsenanordnung sowie ein hier beschriebenes Leuchtmodul unter Bezugnahme auf Zeichnungen anhand von Ausführungsbeispielen näher erläutert. Gleiche Bezugszeichen geben dabei gleiche Elemente in den einzelnen Figuren an. Es sind dabei jedoch keine maßstäblichen Bezüge dargestellt, vielmehr können einzelne Elemente zum besseren Verständnis übertrieben groß dargestellt sein.

Es zeigen:
Figur 1 ein Ausführungsbeispiel eines Leuchtmoduls in einer Querschnittsansicht,
Figuren 2A bis 4B Linsenanordnungen in perspektivischer Darstellung und in Draufsicht,
Figuren 5A bis 8D Linsen in Querschnittsansicht, in Draufsicht und in perspektivischer Darstellung, wobei die Linsen in Figuren 8B und 8D zu Ausführungsformen erfindungsgemäßer Leuchtmodule nach Anspruch 1 gehören,
Figur 9 ein Ausführungsbeispiel einer Linsenanordnung in perspektivischer Darstellung,
Figuren 10A bis 10E Querschnittsdarstellungen von Randbereichen verschiedener Linsenanordnungen,
Figuren 11A bis 12B Leuchtmodule in Querschnittsansichten,
Figuren 13A und 13B Ausführungsbeispiele von Abdeckungen für ein Leuchtmodul in perspektivischer Darstellung.

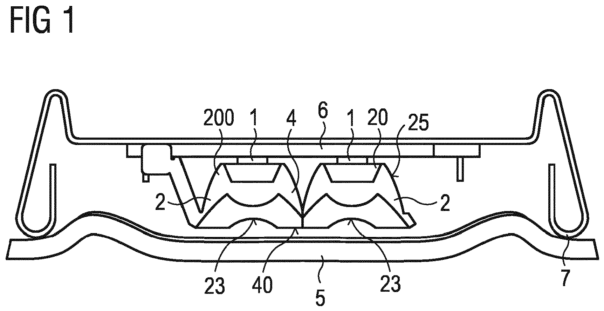

In Figur 1 ist ein Ausführungsbeispiel eines Leuchtmoduls in Querschnittsansicht, zum Beispiel in einer CO-Ebene, gezeigt. Das Leuchtmodul umfasst eine Mehrzahl von punktförmigen Lichtquellen 1, beispielsweise Leuchtdioden (kurz: LEDs). Die Lichtquellen 1 sind auf einem Träger 6 montiert. Bei dem Träger 6 handelt es sich beispielsweise um eine Leiterplatte, wie ein PCB. Im Bereich der Lichtquellen 1 ist der Träger 6 flach ausgebildet. Den Lichtquellen 1 ist eine Linsenanordnung 4 mit einer Mehrzahl von Linsen 2 nachgeordnet. Dabei ist jeder Lichtquelle 1 eine Linse 2 eineindeutig zugeordnet.

Den Linsen 2 wiederum ist eine strahlungsdurchlässige Abdeckung 5 nachgeordnet. Die Abdeckung 5 ist über einen Rahmen 7 mit dem Träger 6 verbunden. Auf diese Weise sind die Lichtquellen 1 sowie die Linsenanordnung 4 von dem Träger 6, dem Rahmen 7 und der Abdeckplatte 5 eingeschlossen.

Die Linsen 2 umfassen jeweils eine Erhebung 200, die sich in eine Richtung weg von einer Unterseite 40 der Linsenanordnung 4 verjüngen. Im oberen Bereich der Linsen 2, also in dem den Lichtquellen 1 zugewandten Bereich, sind erste Ausnehmungen 20 in den Erhebungen 200 vorgesehen. Die Erhebungen 200 sind in lateraler Richtung von einer Außenfläche 25 umgeben, die auch die ersten Ausnehmungen 20 lateral vollständig umgibt.

Die Linsen 2 umfassen jeweils eine Austrittsfläche 23, über die im Betrieb Licht aus den Linsen 2 ausgekoppelt wird. Die Austrittsflächen 23 der Linsen 2 sind alle durch die zusammenhängende Unterseite 40 der Linsenanordnung 4 gebildet. Im Betrieb des Leuchtmoduls der Figur 1 wird Licht aus den Lichtquellen 1 jeweils im Bereich der ersten Ausnehmungen 20 in die Linsen 2 eingekoppelt. Der Anteil des Lichts, der im Inneren der Linse 2 auf die Außenwand 25 trifft, wird aufgrund der sich verjüngenden Form der Erhebung 200 an der Außenwand 25 größtenteils totalreflektiert und in Richtung der Austrittsfläche 23 gelenkt. Nach dem Austritt des Lichts aus der Austrittsfläche 23 der Linsen 2 trifft das Licht auf die Abdeckung 5. Durch die Abdeckung 5 hindurch wird das Licht dann aus dem Leuchtmodul ausgekoppelt.

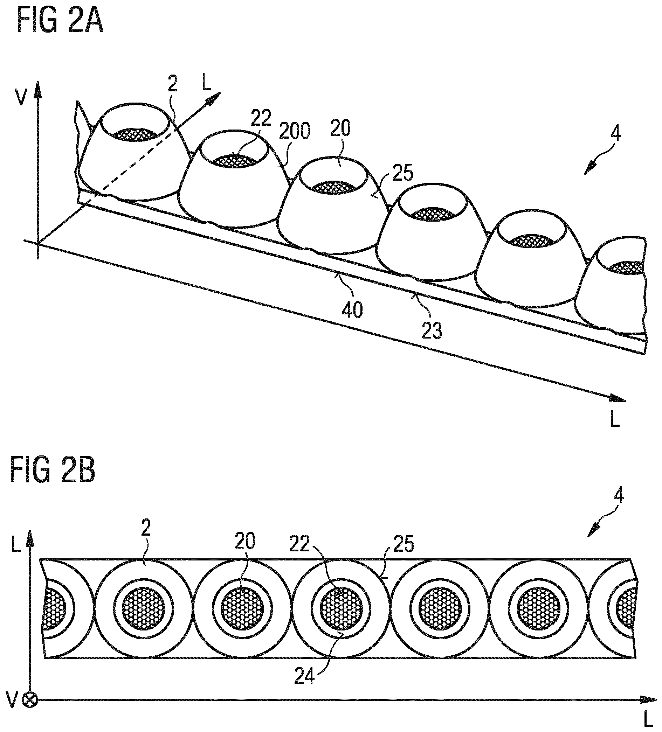

In der Figur 2A ist eine Linsenanordnung 4 in perspektivischer Darstellung gezeigt. Die Linsenanordnung 4 umfasst eine Vielzahl von Linsen 2, die entlang einer Linie beziehungsweise entlang einer Geraden hintereinander aufgereiht sind. Die gesamte Linsenanordnung 4 ist zum Beispiel einstückig ausgebildet und besteht aus Kunststoff.

Zu erkennen ist, dass jede Linse 2 eine Erhebung 200 umfasst, die sich in einer ersten Richtung V, weg von der Austrittsfläche 23 beziehungsweise Unterseite 40, verjüngen. Im oberen Bereich der Linse 2 umfasst jede Linse 2 eine erste Ausnehmung 20. Die erste Ausnehmung 20 erstreckt sich hinein in die Linse 2 bis zu einer ersten Bodenfläche 22.

Die Erhebungen 200 sind jeweils durch eine Außenwand 25 der Erhebungen 200 lateral vollständig umgeben und begrenzt. Die Außenwand 25 umgibt die Ausnehmung 20 lateral vollständig. Die lateralen Richtungen L sind dabei Richtungen senkrecht zur ersten Richtung V.

Ferner ist zu erkennen, dass eine Höhe der Außenwand 25, gemessen entlang der ersten Richtung V, überall ringsum die Ausnehmung 20 zumindest 70 % der Höhe der gesamten Linse 2 aufweist.

In der Figur 2B ist die Linsenanordnung 4 der Figur 2A in Draufsicht dargestellt. Zu erkennen ist, dass die ersten Bodenflächen 22 der Linsen 2 jeweils kreisförmig ausgebildet sind. Die ersten Bodenflächen 22 verlaufen beispielsweise im Wesentlichen senkrecht zur ersten Richtung V.

Lateral sind die ersten Ausnehmungen 20 durch erste Innenwände 24 begrenzt. Die ersten Innenwände 24 haben vorliegend die Form einer Mantelfläche eines Kegelstumpfes. Die erste Bodenfläche 22 und die erste Innenwand 24 bilden Teile einer Eintrittsfläche 22, 24 der Linse 2, über die im Betrieb Licht in die Linse 2 eintritt.

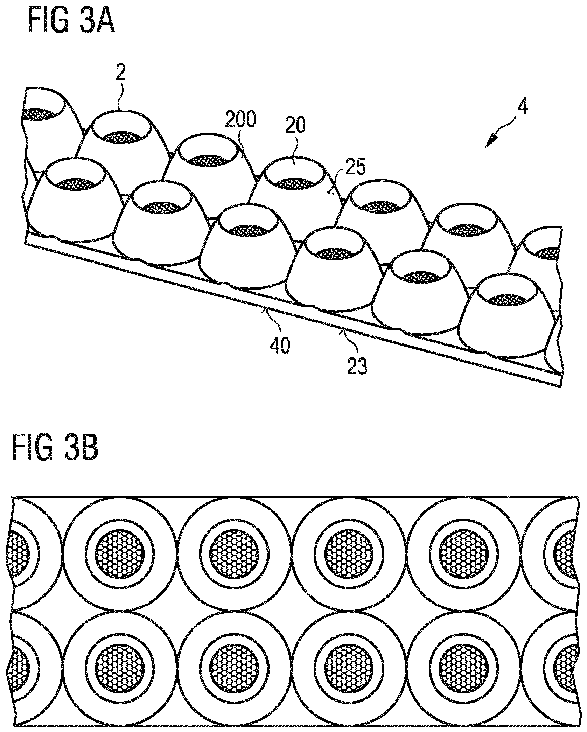

In der Figur 3A ist eine Linsenanordnung 4 gezeigt, die zwei Reihen von jeweils entlang einer Geraden angeordneten Linsen 2 umfasst.

In der Figur 3B ist die Linsenanordnung 4 der Figur 3A in Draufsicht gezeigt.

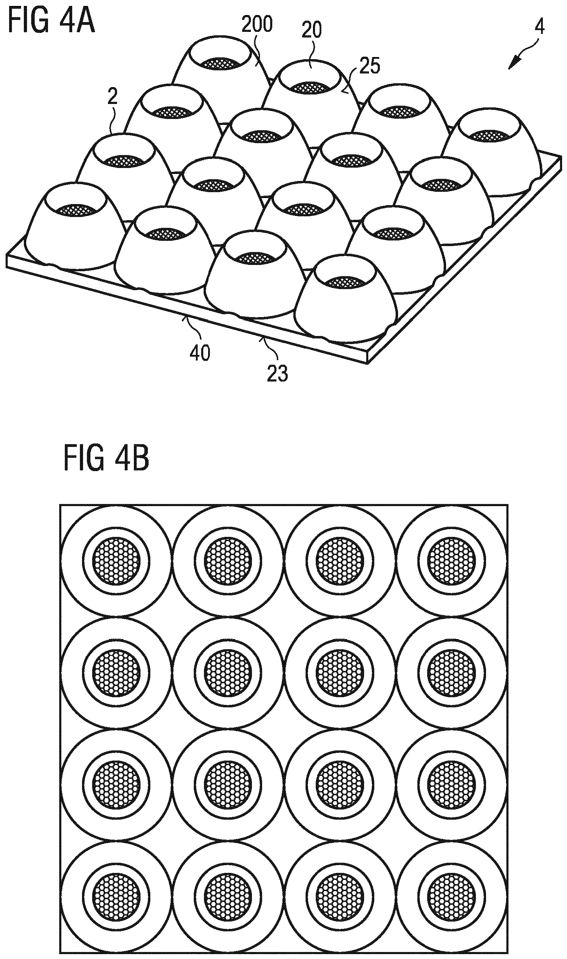

In der Figur 4A ist eine weitere Linsenanordnung 4 gezeigt, bei dem die Linsen 2 lateral nebeneinander in einem quadratischen Matrixmuster angeordnet sind.

In der Figur 4B ist die Linsenanordnung 4 der Figur 4A in Draufsicht dargestellt.

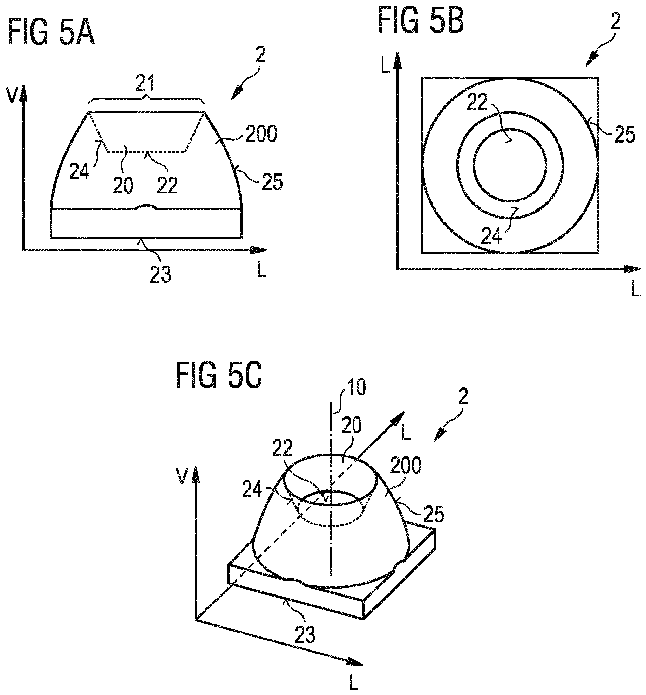

In der Figur 5A ist eine Linse 2, wie sie beispielsweise in den zuvor beschriebenen Linsenanordnungen 4 verwendet ist, detailliert in einer Querschnittsansicht dargestellt. Die erste Ausnehmung 20 erstreckt sich ausgehend von einer ersten Öffnung 21 in Richtung der Austrittsfläche 23 und endet an einer ersten Bodenfläche 22. In lateraler Richtung L ist die erste Ausnehmung 20 durch eine erste Innenwand 24 begrenzt, die sich quer zur ersten Bodenfläche 22 erstreckt.

Die erste Bodenfläche 22 ist im Wesentlichen flach und glatt.

Die erste Ausnehmung 20 verjüngt sich in Richtung der ersten Bodenfläche 22. Insbesondere hat die erste Ausnehmung 20 die Form eines umgedrehten Kegelstumpfes.

In lateraler Richtung L ist die Erhebung 200 der Linse 2 durch die Außenwand 25 begrenzt. Die Außenwand 25 weist eine konvexe Krümmung auf. Dies erweist sich als besonders vorteilhaft für die gewünschte Totalreflexion.

Die Austrittsfläche 23 der Linse 2 ist in diesem Beispiel flach.

In den Figuren 5B und 5C ist die Linse 2 der Figur 5A in Draufsicht und in perspektivischer Darstellung gezeigt. Zu erkennen ist, dass die Außenwand 25, die erste Bodenfläche 22 sowie die erste Innenwand 24 rotationssymmetrisch bezüglich einer Achse 10 durch die erste Ausnehmung 20 ausgebildet ist. Die Achse 10 ist parallel zur ersten Richtung V.

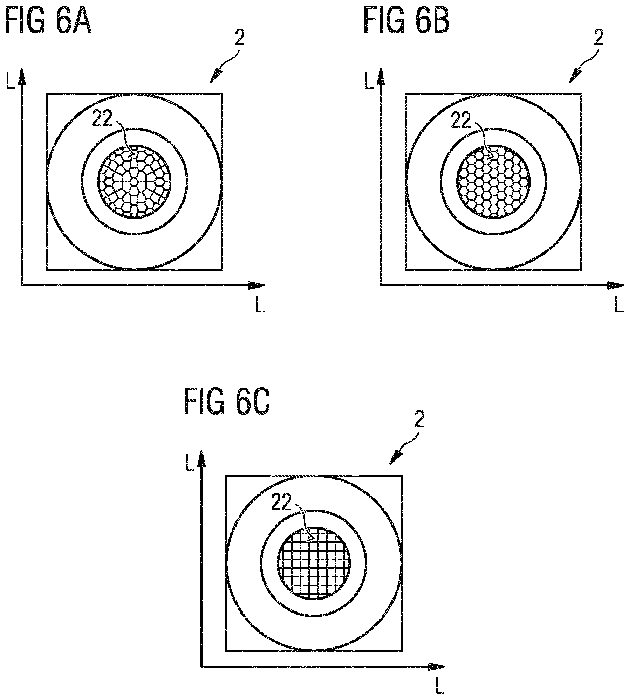

In den Figuren 6A bis 6C sind Draufsichten auf eine Linse 2 gezeigt, wobei die erste Bodenfläche 22 der Linse 2 jeweils mit Mikrolinsen versehen ist. Bei den Mikrolinsen handelt es sich jeweils um Kugelkappen, die in der Figur 6A in einem radialsymmetrischen Muster, in der Figur 6B in einem hexagonalen Muster und in der Figur 6C in einem quadratischen Muster angeordnet sind. Eine gezielte Strukturierung der ersten Bodenfläche 22 mit solchen Mikrolinsen kann bei allen hier beschriebenen Linsen 2 zum Einsatz kommen.

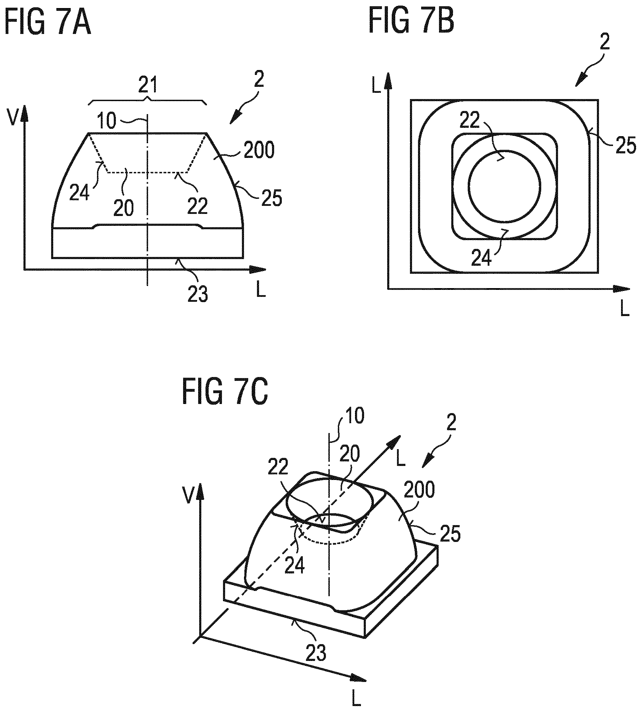

In den Figuren 7A bis 7C ist ein Ausführungsbeispiel einer weiteren Linse 2, wie sie beispielsweise in den hier beschriebenen Linsenanordnungen 4 verwendet werden kann, in verschiedenen Darstellungen gezeigt.

In der Querschnittsansicht der Figur 7A unterscheidet sich die Linse 2 kaum von der Linse 2 der Figur 5A. Insbesondere sind die ersten Ausnehmungen 20 gleich ausgestaltet. Die Außenwand 25 der Erhebung 200 in der Figur 7A unterscheidet sich aber von der der

Figur 5A. Bei Betrachtung der Draufsicht der Figur 7B und der perspektivischen Ansicht der Figur 7C wird ersichtlich, dass die Außenwand 25 keine Rotationssymmetrie bezüglich einer Achse 10 durch die erste Ausnehmung 20 aufweist, sondern lediglich eine 4-zählige Drehsymmetrie. In der Draufsicht der Figur 7B betrachtet hat die Außenwand 25 im Wesentlichen die Kontur eines Quadrats mit abgerundeten Ecken.

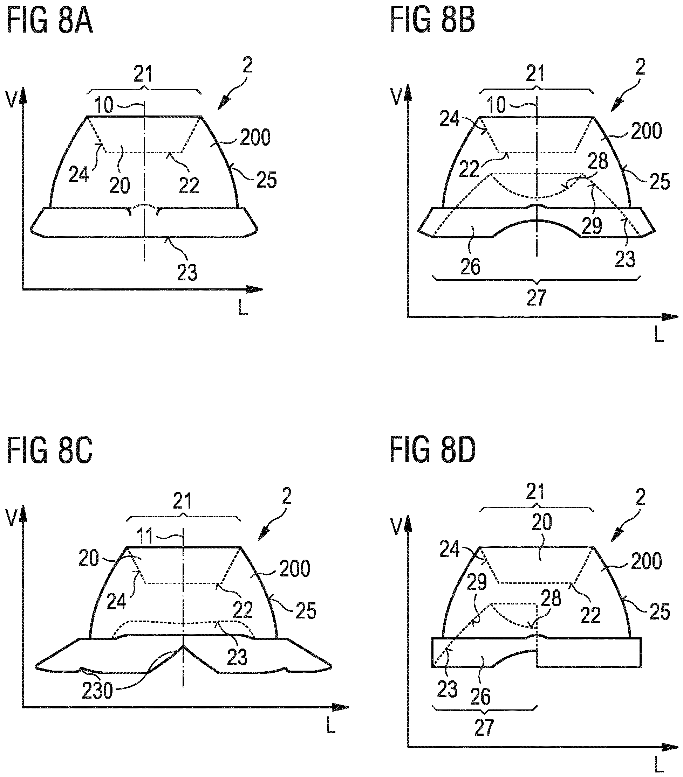

In den Figuren 8A bis 8D sind Querschnittsansichten verschiedener Linsen 2, zum Beispiel in der CO-Ebene betrachtet, dargestellt. Alle Linsen der Figuren 8A bis 8D können in den hier beschriebenen Linsenanordnungen 4 verwendet sein. Dabei unterscheiden sich die Linsen 2 der Figuren 8A bis 8D hinsichtlich der Austrittsfläche 23. Die Austrittsflächen 23 der Figuren 8A bis 8D können zum Beispiel in den Linsen 2 der zuvor beschriebenen Figuren 5A bis 7C verwendet werden.

In der Figur 8A ist wieder die Linse 2 der Figur 5A dargestellt, das heißt die Austrittsfläche 23 der Linse 2 ist im Rahmen der Herstellungstoleranz glatt und flach.

In der Figur 8B dagegen ist im Bereich der Austrittsfläche 23 der Linse 2 eine zweite Ausnehmung 26 gemäß Anspruch 1 der Erfindung vorgesehen. Die zweite Ausnehmung 26 erstreckt sich von einer zweiten Öffnung 27 in Richtung hin zur ersten Ausnehmung 20 und endet an einer zweiten Bodenfläche 28. In lateraler Richtung L ist die zweite Ausnehmung 26 durch eine zweite Innenwand 29 begrenzt. Die zweite Bodenfläche 28 ist konvex gekrümmt. Die Austrittsfläche 23 der Linse 2 wird sowohl durch die zweite Bodenfläche 28 als auch durch die zweite Innenwand 29 gebildet. Die konvexe Krümmung der zweiten Bodenfläche 28 sorgt für eine zusätzliche Bündelung des aus der Linse 2 im Bereich der zweiten Bodenfläche 28 austretenden Lichts.

Die Form der zweiten Ausnehmung 26 beziehungsweise die Form der zweiten Bodenfläche 28 und der zweiten Innenwand 29 ist rotationssymmetrisch bezüglich einer Achse 10 durch die erste Ausnehmung 20 und durch die zweite Ausnehmung 26. Die Achse 10 verläuft parallel zur ersten Richtung V. Die von der Linse 2 erzeugte Lichtverteilung kann insbesondere symmetrisch bezüglich der Achse 10 sein. Ebenso kann die durch die Linse 2 erzeugte Lichtstärke-Verteilung in der hier gezeigten CO-Ebene gleich zu der durch die Linse 2 erzeugten Lichtstärke-Verteilung in der C90-Ebene sein.

In der Figur 8C ist die Austrittsfläche der Linse 2 mit linearen Strukturen 230 versehen. Bei den linearen Strukturen 230 handelt es sich vorliegend um eine mittlere Einkerbung und beidseitig der mittleren Einkerbung angeordneten Rillen. Die mittlere Einkerbung ist V-förmig und umfasst zwei Kerbflächen, die in der ersten Richtung V aufeinander zulaufen und sich an einer Kerbkante schneiden.

Die Strukturen 230 der Austrittsfläche 23 sind spiegelsymmetrisch bezüglich einer durch die erste Ausnehmung 20 und die zweite Ausnehmung 26 verlaufenden Fläche 11. Die durch die Linse 2 erzeugte Lichtstärke-Verteilungskurve in der hier dargestellten CO-Ebene kann daher spiegelsymmetrisch zur Fläche 11 sein. Die Fläche 11 fällt beispielsweise mit der C90-Ebene zusammen.

Allerdings weist die Austrittsfläche 23 keine Rotationssymmetrie oder Drehsymmetrie bezüglich einer Achse durch die erste Ausnehmung 20 und die zweite Ausnehmung 26 auf. Insbesondere ist die Form der Linse 2 in der hier gezeigten CO-Ebene anders als in der C90-Ebene. Entsprechend kann auch die von der Linse 2 erzeugte Lichtverteilung in der CO-Ebene und C90-Ebene unterschiedlich sein.

In der Figur 8D ist im Bereich der Austrittsfläche 23 wieder eine zweite Ausnehmung 26 gemäß Anspruch 1 der Erfindung vorgesehen. Die zweite Ausnehmung 26 weist in der dargestellten CO-Ebene keine Spiegelsymmetrie auf. Daher kann die von der Linse 2 erzeugte Lichtstärkeverteilung der hier gezeigten CO-Ebene asymmetrisch sein. In der C90-Ebene entspricht die Querschnittsform der Linse 2 der Figur 8D aber der Form wie sie in der Figur 8B dargestellt ist. In der C90-Ebene kann eine Lichtstärkeverteilung der Linse 2 daher symmetrisch sein.

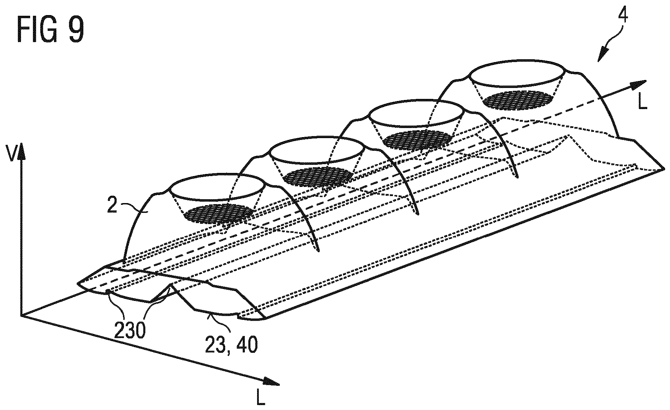

In der Figur 9 ist eine Linsenanordnung 4 gezeigt, bei der eine Mehrzahl von Linsen 2, zum Beispiel von Linsen 2 wie sie in der Figur 8C dargestellt sind, entlang einer Geraden aneinandergereiht sind. Die linearen Strukturen 230 an der Unterseite 40 erstrecken sich entlang der Geraden über eine Mehrzahl der Linsen 2 hinweg. Betrachtet man die Unterseite 40 der Linsenanordnung 4 in einer Querschnittsansicht senkrecht zu der Geraden und verschiebt die Querschnittsansicht entlang der Geraden, so bleibt die Form der Unterseite 40 im Wesentlichen gleich. Mit anderen Worten bleibt die Form der Unterseite 40 der Linsenanordnung 4 entlang der Geraden im Rahmen der Herstellungstoleranz gleich.

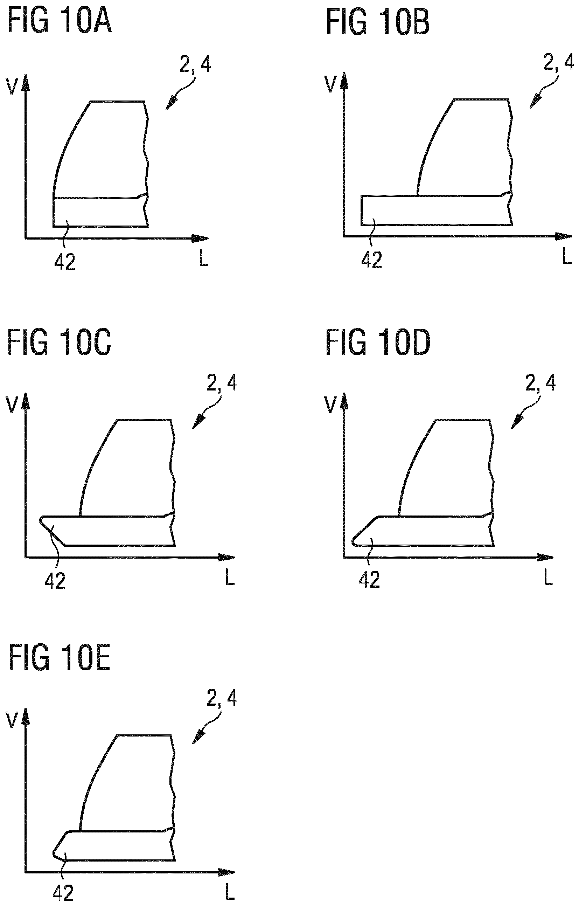

In den Figuren 10A bis 10E sind Randbereiche 42 von Linsenanordnungen 4 detailliert dargestellt. Der Randbereich 42 begrenzt die Linsenanordnung 4 in lateraler Richtung L, ist zusammenhängend ausgebildet und umgibt alle Linsen 2 der Linsenanordnung 4. Die Höhe oder Dicke des Randbereichs 42 ist dabei kleiner als die der Linse 2. Die dargestellten Randbereiche 42 können mit allen zuvor beschriebenen Linsen 2 kombiniert werden.

Die Figuren 10A bis 10E sind Schnittansichten, zum Beispiel in einer CO-Ebene oder C90-Ebene. Die Kontur des Randbereichs 42 ist in den Figuren 10A und 10B die eines Rechtecks. In den Figuren 10C und 10D ist die Kontur des Randbereichs die eines Parallelogramms mit absteigender beziehungsweise aufsteigender Flanke. In der Figur 10E weist die Kontur des Randbereichs 42 in der C0 Ebene die Form eines zur optischen Achse hin gekippten "L"s auf.

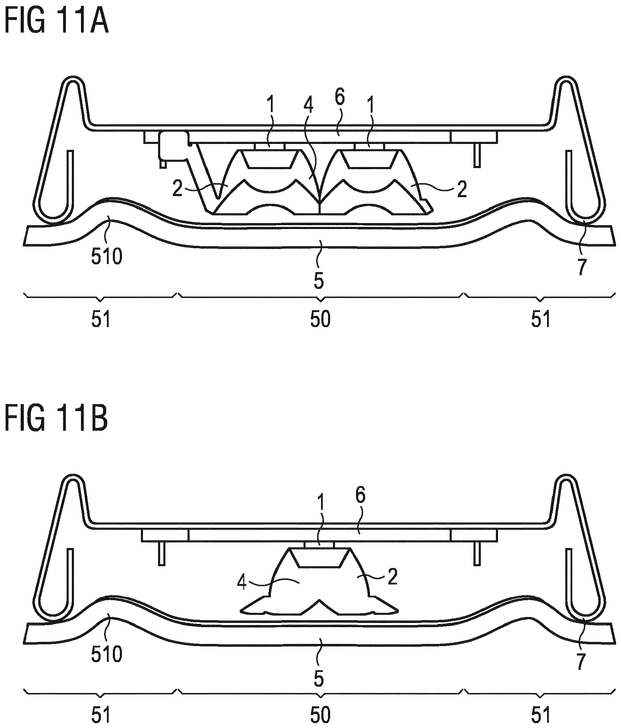

In der Figur 11A ist wiederum das Leuchtmodul der Figur 1A in Querschnittsansicht, zum Beispiel in einer CO-Ebene, dargestellt. In der Figur 11A ist die Abdeckung 5 in einen Mittelbereich 50 und zwei beidseitig dazu liegende Randbereiche 51 aufgeteilt. In Draufsicht auf die Abdeckung 5 überdeckt der Mittelbereich 50 alle Lichtquellen 1. Die Randbereiche 51 überdecken in Draufsicht auf die Abdeckung 5 die Lichtquellen 1 nicht.

In den Randbereichen 51 umfasst die Abdeckung 5 eine Wellenstruktur 510, die so ausgebildet ist, dass das in dem Randbereich 51 auf die Abdeckung 5 treffende Licht in einem spitzeren Winkel auf die Oberfläche trifft als es bei einer planen Fläche der Fall wäre, um die Reflexionsverluste zu reduzieren.

Das Leuchtmodul der Figur 11B unterscheidet sich vom Leuchtmodul der Figur 11A dadurch, dass in der Figur 11B eine Linsenanordnung 4 mit einer einzigen Reihe von Linsen 2 statt mit zwei Reihen von Linsen 2 verwendet ist.

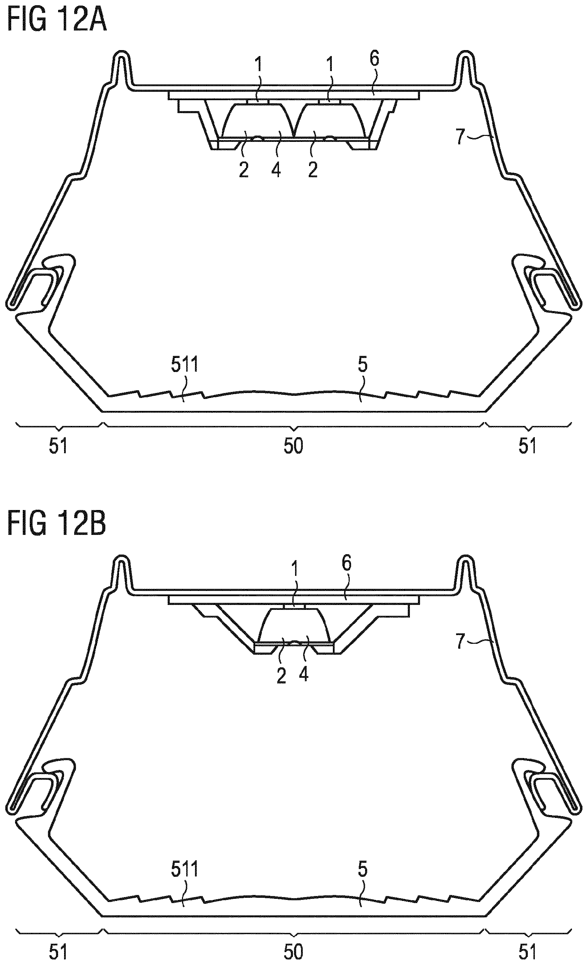

In der Figur 12A ist ein Leuchtmodul in Querschnittsansicht gezeigt, bei dem die Randbereiche 51 der Abdeckung gegenüber dem Mittelbereich 50 der Abdeckung in Richtung einer den Lichtquellen 1 zugewandten Eintrittsseite abgeknickt sind. Der Mittelbereich 50 ist an der Eintrittsseite strukturiert. Vorliegend hat die Eintrittsseite im Mittelbereich 50 die Form einer Fresnel-Linse 511. Die Randbereiche 51 sind linear strukturiert. Die Strukturen haben die Form von Zacken und/oder Rillen.

In der Figur 12B ist anstatt der Linsenanordnung 4 mit zwei Reihen von Linsen 2 eine Linsenanordnung 4 mit einer Reihe von Linsen 2 verwendet.

Die Abdeckungen 5 können transparent und/oder streuend ausgeführt sein.

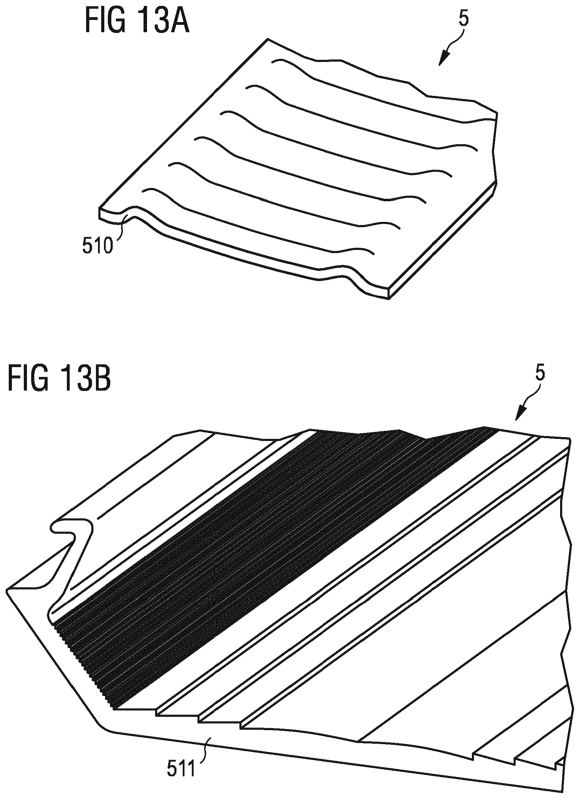

In den Figuren 13A und 13B sind die Abdeckungen 5 der Figuren 12 und 13 in perspektivischer Darstellung gezeigt.

### Bezugszeichenliste

- 1: Lichtquelle
- 2: Linse
- 4: Linsenanordnung
- 5: Abdeckung
- 6: Träger
- 7: Rahmen
- 10: Achse
- 11: Spiegelfläche
- 20: erste Ausnehmung
- 21: erste Öffnung
- 22: erste Bodenfläche
- 23: Austrittsfläche
- 24: erste Innenfläche
- 25: Außenwand
- 26: zweite Ausnehmung
- 27: zweite Öffnung
- 28: zweite Bodenfläche
- 29: zweite Innenwand
- 40: Unterseite der Linsenanordnung
- 200: Erhebung
- 230: Struktur
- 510: Struktur
- 511: Fresnel-Linse
- V: erste Richtung
- L: laterale Richtung

## Patentansprüche

1. Leuchtmodul, umfassend
- eine Linsenanordnung (4) mit mehreren lateral nebeneinander angeordneten Linsen (2),
- mehrere lateral nebeneinander angeordnete Lichtquellen (1), die im Betrieb jeweils Licht in Richtung der Linsenanordnung (4) emittieren, wobei
- die Linsen (2) jeweils eine Eintrittsfläche (22, 24) und eine Austrittsfläche (23) umfassen, wobei die Eintrittsfläche (22, 24) der Austrittsfläche (23) jeweils in einer ersten Richtung nachgeordnet ist,
- die Linsen (2) jeweils eine sich in der ersten Richtung verjüngende Erhebung (200) mit einer lateral umlaufenden Außenwand (25) umfassen,
- in dem der Austrittsfläche (23) abgewandten Bereich der Erhebung (200) jeweils eine erste Ausnehmung (20) in der Erhebung (200) ausgebildet ist,
- die Außenwand (25) die Ausnehmung (20) jeweils lateral vollständig umgibt,
- eine entlang der ersten Richtung gemessene Höhe der Außenwand (25) überall rings um die Ausnehmung (20) jeweils zumindest 50 % der Höhe der gesamten Linse (2) beträgt,
- die Austrittsflächen (23) der Linsen (2) durch eine zusammenhängende Unterseite (40) der Linsenanordnung(4) gebildet sind,
- jeder Lichtquelle (1) genau eine Linse (2) nachgeordnet ist,
- die Erhebung (200) jeder Linse (2) sich in Richtung der Lichtquelle (1) erstreckt, sodass die ersten Ausnehmungen (20) jeweils den Lichtquellen (1) zugewandt sind,
- das Leuchtmodul so eingerichtet ist, dass das aus einer Lichtquelle (1) austretende Licht im Bereich der ersten Ausnehmung (20) in die nachgeordnete Linse (2) eintritt, der davon auf die Außenwand (25) der Linse (2) treffende Anteil des Lichts größtenteils totalreflektiert wird und das Licht über die Austrittsfläche (23) ausgekoppelt wird,
- die Linsen (2) der Linsenanordnung (4) im Bereich der Austrittsfläche (23) jeweils eine zweite Ausnehmung (26) umfassen, die sich ausgehend von einer zweiten Öffnung (27) in die jeweilige Linse (2) hinein bis zu einer zweiten Bodenfläche (28) erstreckt,
- die zweite Ausnehmung (26) in lateraler Richtung von einer zweiten Innenwand (29) der jeweiligen Linse (2) begrenzt ist,
- die Austrittsfläche (23) der jeweiligen Linse (2) die zweite Bodenfläche (28) und die zweite Innenwand (29) umfasst,
- die laterale Ausdehnung der zweiten Ausnehmung (26) von der zweiten Öffnung (27) in Richtung der zweiten Bodenfläche (28) abnimmt,
- die zweite Bodenfläche (28) eine konvex gekrümmte Fläche ist, **dadurch gekennzeichnet, dass**
- das Leuchtmodul eine lichtdurchlässige Abdeckplatte (5) umfasst, die beabstandet zu den Linsen (2) angeordnet ist,
- im Betrieb das über die Austrittsflächen (23) ausgekoppelte Licht auf die Abdeckplatte (5) trifft,
- wobei die Abdeckplatte (5) in einem Mittelbereich (50), der in Draufsicht auf die Abdeckplatte (5) die Lichtquellen (1) überdeckt, strukturiert ist, um eine weitere Bündelung des von der Linse ausgestrahlten Lichts zu erreichen.

2. Leuchtmodul nach Anspruch 1, wobei
- sich die erste Ausnehmung (20) einer Linse (2) ausgehend von einer ersten Öffnung (21) in der Linse (2) bis zu einer ersten Bodenfläche (22) der Linse (2) erstreckt,
- die erste Ausnehmung (20) in lateraler Richtung von einer ersten Innenwand (24) der Linse (2) begrenzt ist,
- die Eintrittsfläche (22, 24) der Linse (2) die erste Bodenfläche (22) und die erste Innenwand (24) umfasst,
- die Außenwand (25) in eine Richtung entgegen der ersten Richtung mit der ersten Öffnung (21), der ersten Innenwand (24) und der ersten Bodenfläche (22) überlappt und die erste Bodenfläche (22) überragt,
- eine laterale Ausdehnung der ersten Ausnehmung (20) jeweils von der ersten Öffnung (21) in Richtung der ersten Bodenfläche (22) abnimmt.

3. Leuchtmodul nach Anspruch 1 oder 2,
wobei die Außenwand (25) einer Linse (2) konvex gekrümmt ist.

4. Leuchtmodul nach einem der vorhergehenden Ansprüche,
wobei die Außenwand (25) einer Linse (2) rotationssymmetrisch bezüglich einer durch die erste Ausnehmung (20) verlaufenden Achse ist.

5. Leuchtmodul nach einem der vorhergehenden Ansprüche,
wobei die Außenwand (25) einer Linse (2) eine n-zählige Drehsymmetrie bei einer Drehung um eine durch die erste Ausnehmung (20) verlaufenden Achse aufweist, wobei n eine ganze Zahl größer gleich 2 ist.

6. Leuchtmodul nach einem der vorhergehenden Ansprüche,
wobei die Austrittsfläche (23) einer Linse (2) im Rahmen der Herstellungstoleranz flach ist.

7. Leuchtmodul nach einem der vorhergehenden Ansprüche,
wobei die zweite Innenwand (29) und/oder die zweite Bodenfläche (28) rotationssymmetrisch bezüglich einer durch die zweite Ausnehmung (26) verlaufenden Achse gestaltet ist.

8. Leuchtmodul nacheinem der Ansprüche 1 bis 6,
wobei die zweite Bodenfläche (28) in Draufsicht auf die zweite Bodenfläche (28) betrachtet halbkreisförmig oder kreissegmentförmig gestaltet ist.

9. Leuchtmodul nach einem der vorhergehenden Ansprüche,
wobei die Austrittsfläche (23) einer Linse (2) mit linear verlaufenden Strukturen (230) versehen ist.

10. Leuchtmodul nach einem der vorhergehenden Ansprüche,
wobei die Linsenanordnung (4) einstückig ausgebildet ist.

11. Leuchtmodul nach Anspruch 9, wobei
- mehrere Linsen (2) entlang einer Linie angeordnet sind,
- die linearen Strukturen (230) sich über die in der Linie angeordneten Linsen (2) erstrecken, sodass die geometrische Form der Unterseite (40) der Linsenanordnung (4) entlang der Linie im Rahmen der Herstellungstoleranz nicht variiert.

12. Leuchtmodul nach einem der vorhergehenden Ansprüche,
umfassend einen die Linsenanordnung (4) lateral begrenzenden Randbereich (42), wobei
- der Randbereich (42) zusammenhängend ist und alle Linsen (2) lateral umgibt,
- der Randbereich (42) dünner als die Linsen (2) ausgebildet ist,
- der Randbereich (42) dazu eingerichtet ist, das in den Randbereich (42) eintretende Licht durch Brechung und/oder Totalreflexion zu lenken.

13. -Leuchtmodul nach einem der vorhergehenden Ansprüche,
wobei die Linsen (2) so bezüglich der Lichtquellen (1) angeordnet sind, dass zumindest 90 % des von einer Lichtquelle (1) emittierten Lichtes in die erste Ausnehmung (20) der zugeordneten Linse (2) emittiert wird.

14. Leuchtmodul nach einem der vorhergehenden Ansprüche, wobei die Abdeckplatte (5) in einem Randbereich (51), der in Draufsicht auf die Abdeckplatte (5) nicht mit den Lichtquellen (1) überlappt, Strukturen zur Umlenkung des in den Randbereich (51) der Abdeckplatte (5) gelenkten Lichts umfasst.

## Claims

1. Lighting module, comprising
- a lens arrangement (4) having a plurality of lenses (2) arranged laterally next to one another,
- a plurality of light sources (1) arranged laterally next to one another, which each emit light in the direction of the lens arrangement (4) during operation, wherein
- the lenses (2) each comprise an entrance surface (22, 24) and an exit surface (23), wherein the entrance surface (22, 24) is arranged downstream of the exit surface (23) in a first direction,
- the lenses (2) each comprise an elevation (200) tapering in the first direction and having a laterally circumferential outer wall (25),
- a first recess (20) is formed in the elevation (200) in the region of the elevation (200) facing away from the exit surface (23),
- the outer wall (25) completely surrounds the respective recess (20) laterally,
- a height of the outer wall (25) measured along the first direction is at least 50% of the height of the entire lens (2) everywhere around the recess (20),
- the exit surfaces (23) of the lenses (2) are formed by a continuous underside (40) of the lens arrangement (4),
- exactly one lens (2) is arranged downstream of each light source (1),
- the elevation (200) of each lens (2) extends in the direction of the light source (1), so that the first recesses (20) each face the light sources (1),
- the lighting module is configured such that the light exiting from a light source (1) enters the downstream lens (2) in the region of the first recess (20), the portion of the light striking the outer wall (25) of the lens (2) is largely totally reflected and the light is coupled out via the exit surface (23),
- the lenses (2) of the lens arrangement (4) each comprise a second recess (26) in the region of the exit surface (23), which second recess extends from a second opening (27) into the respective lens (2) as far as a second bottom surface (28),
- the second recess (26) is delimited in the lateral direction by a second inner wall (29) of the respective lens (2),
- the exit surface (23) of the respective lens (2) comprises the second bottom surface (28) and the second inner wall (29),
- the lateral extent of the second recess (26) decreases from the second opening (27) in the direction of the second bottom surface (28),
- the second bottom surface (28) is a convexly curved surface,
**characterised in that**
- the lighting module comprises a light-transmissive cover plate (5) which is arranged at a distance from the lenses (2),
- during operation the light coupled out via the exit surfaces (23) impinges on the cover plate (5),
- wherein the cover plate (5) is structured in a central region (50) which covers the light sources (1) in a plan view of the cover plate (5), in order to achieve a further bundling of the light emitted by the lens.

2. Lighting module according to claim 1, wherein
- the first recess (20) of a lens (2) extends from a first opening (21) in the lens (2) as far as a first bottom surface (22) of the lens (2),
- the first recess (20) is delimited in the lateral direction by a first inner wall (24) of the lens (2),
- the entry surface (22, 24) of the lens (2) comprises the first bottom surface (22) and the first inner wall (24),
- the outer wall (25) overlaps in a direction counter to the first direction with the first opening (21), the first inner wall (24) and the first bottom surface (22) and projects beyond the first bottom surface (22),
- a lateral extent of the first recess (20) decreases from the first opening (21) in the direction of the first bottom surface (22).

3. Lighting module according to claim 1 or 2,
wherein the outer wall (25) of a lens (2) is convexly curved.

4. Lighting module according to one of the preceding claims,
wherein the outer wall (25) of a lens (2) is rotationally symmetrical with respect to an axis extending through the first recess (20).

5. Lighting module according to one of the preceding claims,
wherein the outer wall (25) of a lens (2) has an n-fold rotational symmetry during a rotation about an axis extending through the first recess (20), wherein n is an integer greater than or equal to 2.

6. Lighting module according to one of the preceding claims,
wherein the exit surface (23) of a lens (2) is flat within the scope of the manufacturing tolerance.

7. Lighting module according to one of the preceding claims,
wherein the second inner wall (29) and/or the second bottom surface (28) is rotationally symmetrical with respect to an axis extending through the second recess (26).

8. Lighting module according to one of claims 1 to 6,
wherein the second bottom surface (28) is semicircular or circular segment-shaped when viewed in a plan view of the second bottom surface (28).

9. Lighting module according to one of the preceding claims,
wherein the exit surface (23) of a lens (2) is provided with linearly extending structures (230).

10. Lighting module according to one of the preceding claims,
wherein the lens arrangement (4) is formed in one piece.

11. Lighting module according to claim 9, wherein
- a plurality of lenses (2) are arranged along a line,
- the linear structures (230) extend over the lenses (2) arranged in the line, so that the geometric shape of the underside (40) of the lens arrangement (4) does not vary along the line within the scope of the manufacturing tolerance.

12. Lighting module according to one of the preceding claims,
comprising an edge region (42) laterally delimiting the lens arrangement (4), wherein
- the edge region (42) is continuous and laterally surrounds all lenses (2),
- the edge region (42) is formed thinner than the lenses (2),
- the edge region (42) is configured to direct the light entering the edge region (42) by refraction and/or total reflection.

13. Lighting module according to one of the preceding claims,
wherein the lenses (2) are arranged with respect to the light sources (1) such that at least 90% of the light emitted by a light source (1) is emitted into the first recess (20) of the associated lens (2).

14. Lighting module according to one of the preceding claims,
wherein the cover plate (5) comprises, in an edge region (51) which does not overlap with the light sources (1) in a plan view of the cover plate (5), structures for deflecting the light directed into the edge region (51) of the cover plate (5).

## Revendications

1. Module d'éclairage comprenant
- une disposition de lentilles (4) avec plusieurs lentilles (2) disposées latéralement les unes à côté des autres,
- plusieurs sources de lumière (1) disposées latéralement les unes à côté des autres, qui, lors du fonctionnement, émettant chacune de la lumière en direction de la disposition de lentilles (4), dans lequel
- les lentilles (2) comprennent chacune une face d'entrée (22, 24) et une face de sortie (23), dans lequel la face d'entrée (22, 24) est disposée en aval de la face de sortie (23) respectivement dans une première direction,
- les lentilles (2) comprennent chacune une saillie (200) se rétrécissant dans la première direction, avec une paroi externe (25) circulaire latérale,
- dans la partie de la saillie (200) opposée à la face de sortie (23), est réalisé respectivement un premier évidement (20) dans la saillie (200),
- la paroi externe (25) entoure entièrement l'évidement (20) respectivement de manière latérale,
- une hauteur, mesurée le long de la première direction, de la paroi externe (25) représente, partout autour de l'évidement (20), respectivement au moins 50 % de la hauteur de la lentille (2) entière,
- les faces de sortie (23) des lentilles (2) sont constituées d'un côté inférieur (40) continu de la disposition de lentilles (4),
- exactement une lentille (2) est disposée en aval de chaque source de lumière (1),
- la saillie (200) de chaque lentille (2) s'étend en direction de la source de lumière (1), de sorte que les premiers évidements (20) sont orientés respectivement vers les sources de lumière (1),
- le module d'éclairage est conçu de sorte que la lumière sortant d'une source de lumière (1) entre au niveau du premier évidement (20) dans la lentille (2) disposée en aval, la partie de la lumière arrivant sur la paroi externe (25) de la lentille (2) est réfléchie en grande partie et la lumière est découplée par la face de sortie (23),
- les lentilles (2) de la disposition de lentilles (4) comprennent chacune, au niveau de la face de sortie (23), un deuxième évidement (26), qui s'étend à partir d'une deuxième ouverture (27) dans lentille (2) correspondante jusqu'à une deuxième face inférieure (28),
- le deuxième évidement (26) est délimité, dans la direction latérale, par une deuxième paroi interne (29) de la lentille (2) correspondante,
- la face de sortie (23) de la lentille (2) correspondante (2) comprend la deuxième face inférieure (28) et la deuxième paroi interne (29),
- l'extension latérale du deuxième évidement (26) diminue à partie de la deuxième ouverture (27) en direction de la deuxième face inférieure (28),
- la deuxième face inférieure (28) est une face incurvée de manière convexe, **caractérisé en ce que**
- le module d'éclairage comprend une plaque de recouvrement translucide (5) qui est disposée à une certaine distance des lentilles (2),
- lors du fonctionnement, la lumière découplée par les faces de sortie (23) arrive sur la plaque de recouvrement (5),
- dans lequel la plaque de recouvrement (5) est structurée, dans une partie centrale (50), qui recouvre, en vue de dessus de la plaque de recouvrement (5), les sources de lumière (1), afin d'obtenir une focalisation supplémentaire de la lumière sortant de la lentille.

2. Module d'éclairage selon la revendication 1, dans lequel
- le premier évidement (20) d'une lentille (2) s'étend à partir d'une première ouverture (21) dans la lentille (2) jusqu'à une première face inférieure (22) de la lentille (2),
- le premier évidement (20) est délimité, dans la direction latérale, par une première paroi interne (24) de la lentille (2),
- la face d'entrée (22, 24) de la lentille (2) comprend la première face inférieure (22) et la première paroi interne (24),
- la paroi externe (25) se superpose, dans une direction opposée à la première direction, avec la première ouverture (21), la première paroi interne (24) et la première face inférieure (22) et dépasse de la première face inférieure (22),
- une extension latérale du premier évidement (20) diminue respectivement à partir de la première ouverture (21) en direction de la première face inférieure (22).

3. Module d'éclairage selon la revendication 1 ou 2,
dans lequel la paroi externe (25) d'une lentille (2) est incurvée de manière convexe.

4. Module d'éclairage selon l'une des revendications précédentes,
dans lequel la paroi externe (25) d'une lentille (2) est symétrique en rotation par rapport à un axe traversant le premier évidement (20).

5. Module d'éclairage selon l'une des revendications précédentes,
dans lequel la paroi externe (25) d'une lentille (2) présente une symétrie de révolution d'ordre n lors d'une rotation autour d'un axe traversant le premier évidement (20), dans lequel n est un nombre entier supérieur ou égal à 2.

6. Module d'éclairage selon l'une des revendications précédentes,
dans lequel la face de sortie (23) d'une lentille (2) est plane dans le cadre de la tolérance de fabrication.

7. Module d'éclairage selon l'une des revendications précédentes,
dans lequel la deuxième paroi interne (29) et/ou la deuxième face inférieure (28) est symétrique en rotation par rapport à un axe traversant le deuxième évidement (26).

8. Module d'éclairage selon l'une des revendications 1 à 6,
dans lequel la deuxième face inférieure (28) est conçue, en vue de dessus de la deuxième face inférieure (28), sous la forme d'un demi-cercle ou d'un segment de cercle.

9. Module d'éclairage selon l'une des revendications précédentes,
dans lequel la face de sortie (23) d'une lentille (2) est munie de structures (230) s'étendant de manière linéaire.

10. Module d'éclairage selon l'une des revendications précédentes,
dans lequel la disposition de lentilles (4) est réalisée d'une seule pièce.

11. Module d'éclairage selon la revendication 9, dans lequel
- plusieurs lentilles (2) sont disposées le long d'une ligne,
- les structures linéaires (230) s'étendent sur les lentilles (2) disposées en ligne, de sorte que la forme géométrique du côté inférieur (40) de la disposition de lentilles (4) ne varie pas le long de la ligne dans le cadre de la tolérance de fabrication.

12. Module d'éclairage selon l'une des revendications précédentes,
comprenant une zone de bord (42) délimitant latéralement la disposition de lentilles (4), dans lequel
- la zone de bord (42) est continue et entoure toutes lentilles (2) latéralement,
- la zone de bord (42) est plus mince que les lentilles (2),
- la zone de bord (42) est conçue pour dévier la lumière entrant dans la zone de bord (42) par réfraction et/ou réflexion totale.

13. Module d'éclairage selon l'une des revendications précédentes,
dans lequel les lentilles (2) sont disposées par rapport aux sources de lumière (1) de sorte qu'au moins 90 % de la lumière émise par une source de lumière (1) est émise vers le premier évidement (20) de la lentille (2) correspondante.

14. Module d'éclairage selon l'une des revendications précédentes
dans lequel la plaque de recouvrement (5) comprend, dans une zone de bord (51), qui ne se superpose pas, dans une vue de dessus de la plaque de recouvrement (5), avec les sources de lumière (1), des structures permettant de dévier la lumière guidée vers la zone de bord (51) de la plaque de recouvrement (5).
